# EUROPÄISCHE PATENTSCHRIFT

(11) **EP 0 516 936 B1**
(45) Veröffentlichungstag und Bekanntmachung des Hinweises auf die Patenterteilung: **09.11.1994**
(21) Anmeldenummer: 92105669.3
(22) Anmeldetag: 02.04.1992
(51) Int. Cl.: B29B 7/74

(54) **Verfahren und Einrichtung zur Aufbereitung oder Herstellung von Kunststoffen**
Method and device for preparing or making plastic materials
Procédé et dispositif pour préparer ou fabriquer des matériaux plastiques

(30) Priorität: 06.06.1991 DE 4118530
(43) Veröffentlichungstag der Anmeldung: 09.12.1992
(73) Patentinhaber: Werner & Pfleiderer GmbH, 70469 Stuttgart (DE)
(72) Erfinder: Boden, Hellmut, Dipl.-Ing. (FH), W-7132 Illingen (DE); Uhland, Eberhard, Dr., W-7120 Bietigheim (DE); Wobbe, Hans, Dr., W-7253 Malmsheim (DE)

(56) Entgegenhaltungen:
- DE-A- 1 557 005
- FR-A- 1 485 408
- GB-A- 2 116 865
- GB-A- 2 173 441
- US-A- 3 226 097
- US-A- 3 572 647

## Beschreibung

Die Erfindung betrifft ein Verfahren und eine Einrichtung zur zweistufigen Aufbereitung oder Herstellung von Kunststoffen.

Der Aufbau und die Wirkungsweise eines kontinuierlich arbeitenden zweiwelligen Schneckenextruders (ZSK) und dessen Einsatz bei der Aufbereitung und Herstellung fast sämtlicher Kunststofftypen ist aus der Praxis und Literatur hinreichend bekannt (z.B. Kunststoffmaschinenführer S. 960 bis 968, Carl Hauser Verlag München, Wien, 2. Aufl. 84).

Diese Schneckenkneter sind dabei mindestens mit einer Beschickungseinheit, sowie meistens mit einer oder mehreren Entgasungsöffnungen und gegebenenfalls mit einer Granuliereinheit versehen.
Die Zuführung der Ausgangsmaterialien und Zuschlagstoffe zum Extruder kann dabei im freien Falle über vertikale Zuführschächte oder mittels vertikalen oder horizontalem Stopfwerk erfolgen.

Aus der DE-OS 21 28 468 ist ein Chargenmischer, bestehend aus einem trichterförmigen Behälter, in dem zwei sich gegenseitig und die Behälterinnenwand abstreifenden von unten antreibbare Schneckenwendeln angeordnet sind, bekannt, der zur Endverarbeitung bei einer Kondensationspolymerisation eingesetzt wird.

Hierbei erfolgt im wesentlichen ein chargenweiser Endverarbeitungsvorgang. Ausserdem ist der hieraus bekannte selbstreinigende Mischer für eine intensive Behandlung der Kunststoffmasse zur Erzielung eines hochwertigen Endproduktes nicht geeignet, da nur im unteren Bereich ein entsprechender Druck aufgebaut werden kann und im oberen Behälterbereich Toträume enstehen wo keine intensive Vermischung erfolgt.

Zur Erhöhung der Entgasungsleistung ist es auch schon bekannt vor dem Schneckenkneter eine getrennte Vorstufe, bestehend aus Flashverdampfer und zweiwelliger Dosierschnecke, mit der eine mehrstufige Entgasung von Polymerlösungen mit hohem Lösungsmittelanteil vorgenommen wird, anzuordnen. Hierzu ist ein grosser Anlagenaufwand notwendig

Der Erfindung liegt die Aufgabe zugrunde die Wirtschaftlichkeit bei der Aufbereitung oder Herstellung unterschiedlicher Kunststofftypen zu verbessern und eine Leistungssteigerung bei Schneckenknetern zu erzielen.

Die Aufgabe wird mit den Merkmalen des Patentanspruches 1 bei einem Verfahren und mit den Merkmalen des Patentanspruches 5 mit einer Einrichtung gelöst.

Hiernach wird eine wirtschaftliche Aufbereitung oder Herstellung von Kunststoffen mit unterschiedlichen Eigenschaften erreicht, da bereits eine dem jeweiligen Kunststofftyp angepasste Aufbereitung, wie Vorkonzentrierung, Homogenisierung, Entgasung grosser Mengen flüchtiger Bestandteile bei einstellbaren Verweilzeiten in der Vorstufe ermöglicht wird und dadurch die Durchsatzleistung in der zweiten Stufe, z.B. in einem nachfolgenden Schneckenextruder erhöht wird. Durch die selbstreinigende und beheizte Vorstufe können viele Kunststofftypen optimal aufbereitet dem nachfolgenden Schneckenextruder exakt zudosiert werden. Durch das grosse freie Volumen der Vorstufe ist eine optimale Entgasung gegeben.

Nach den Merkmalen der Ansprüche 2 bis 4 sind vorteilhafte Anwendungsgebiete der erfindungsgemäss ausgebildeten Vorstufe ermöglicht.

In Weiterbildung der Erfindung nach den Merkmalen des Anspruches 6 kann die Verweilzeit in der Vorstufe sowie die dosierte totraumfreie Übergabe in den nachfolgenden Schneckenextruder variiert werden.
Mit den Merkmalen des Anspruches 7 ist eine besonders vorteilhafte Ausbildung des Doppelkegelbehälters der Vorstufe aufgezeigt, wobei durch die tangentiale Zuführung die gute Vermischung in der Vorstufe gefördert wird.

Mit den Merkmalen des Anspruches 8 liegen besonders günstige Voraussetzungen für Reaktionsprozesse mit längeren Verweilzeiten vor, da durch die Zahnradpumpe ein Einfluss auf das Produktniveau in der Vorstufe ausgeübt werden kann.

In Weiterbildung des Erfindungsgedankens ist eine Kombination der Vorstufe nach den Merkmalen des Anspruches 9 für bestimmte Verfahrensschritte in der Kunststoffaufbereitung vorteilhaft.

Entsprechend den Merkmalen des Anspruches 10 ist der Einsatz der Vorstufe als Entgasungseinrichtung bei einem Schneckenextruder aufgezeigt.

Ein Ausführungsbeispiel der Erfindung wird in der Zeichnung dargestellt und nachstehend erläutert.
Es zeigen:
- Fig. 1: eine vertikal auf einen Schneckenextruder aufgesetzte Vorstufe, teilweise im Schnitt dargestellt;

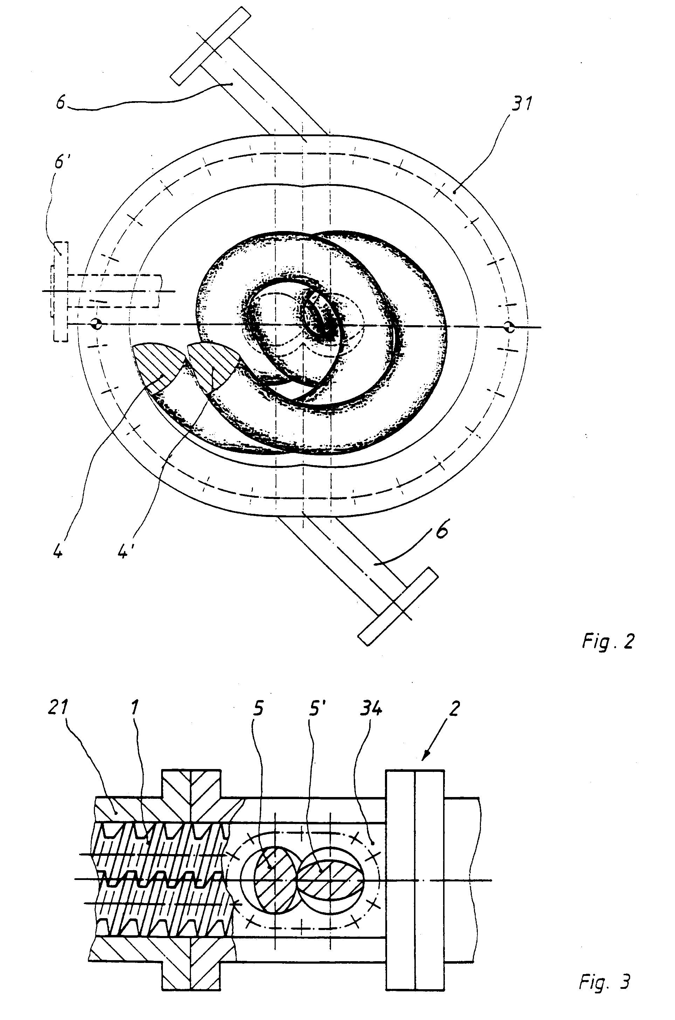

- Fig. 2: einen Schnitt gem. Fig. 1 entlang der Linie I-I
- Fig. 3: eine Draufsicht entlang der Linie II-II gem. Fig. 1 auf die Übergabeorgane

Auf einen zweiwelligen Schneckenextruder 2 ist ein Schneckenkneter als Vorstufe auf dem Schneckengehäuse 21 angeordnet. Die Vorstufe besteht aus einem vertikalen Doppelkegelbehälter 3, der aus zwei gegeneinander geflanschte Kegelstümpfe 31 und 32 gebildet ist. Der untere Kegelbehälter 31 ist druckdicht über einer Öffnung 22 des Schneckenextruders 2 auf dem Schneckengehäuse 21 mittels Flansch 34 befestigt. Der obere Kegelbehälter 32 ist mit einem zylindrischen Flansch 33 versehen. Auf dem Flansch 33 ist ein Distanzstück 13 angeordnet, auf welchem ein Getriebe 7 und ein Motor 8 vertikal übereinander als Antrieb für die im Doppelkegelbehälter 3 angeordneten schneckenförmigen Wendeln 4,4' vorgesehen sind.

Am unteren Übergang von der Vorstufe 3 zum Schneckenextruder 2 sind in der Öffnung 22 des Gehäuses 21 auswechselbare Übergabeorgane - bestehend aus zwei gleichsinnig drehenden ineinander greifenden Schnecken 5,5' - angeordnet, die mit den Wendeln 4,4' in Wirkungsverbindung stehen. Den grössten Durchmesser besitzt der Doppelkegelbehälter 3 in ca 75% seiner Höhe. In diesem Bereich bzw. etwas oberhalb oder unterhalb sind tangential ein oder mehrere Zugabeöffnungen 6 angeordnet. Im oberen Kegelteil 32 ist ein Entgasungsöffnung 9 sowie eine weitere Zugabeöffnung 6'angeordnet.

Der Doppelkegelbehälter 3 ist zum Zwecke der Beheizung doppelwandig ausgebildet. In dem Zwischenraum zwischen äusserer Wand 31 und Innenwand 31' bzw. 32 u. 32' kann ein Heizmedium eingebracht werden. Die Zu- und Abführung für das Heizmedium und die Doppelwände des Behälters sind in der Zeichnung nicht näher dargestellt. Die Beheizung kann auch auf eine andere Art, z.B. elektrisch erfolgen.

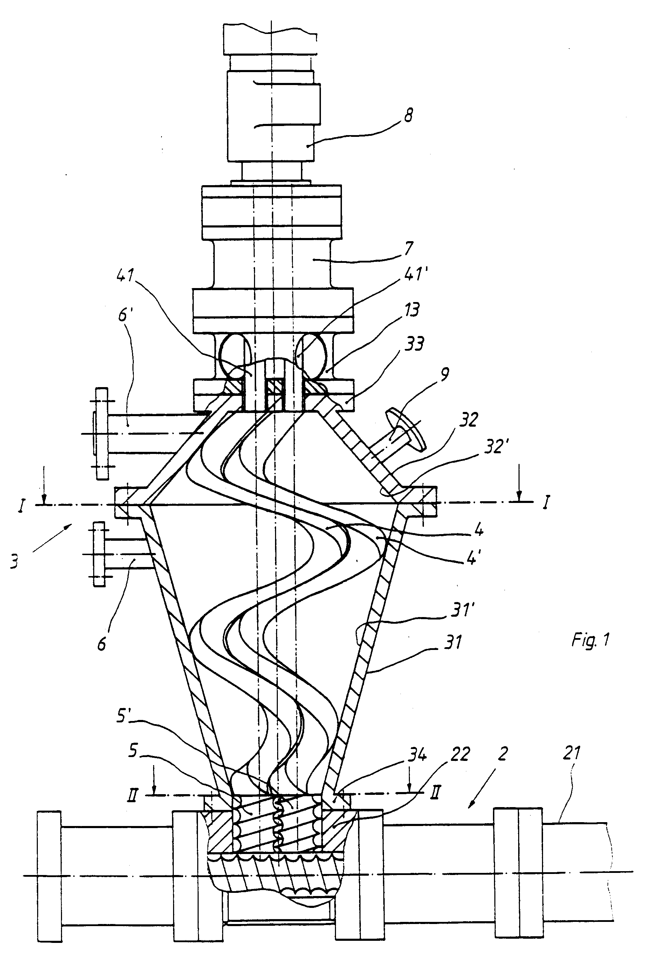

In Fig. 3 ist eine Draufsicht nach Fig. 1 gemäss der Linie II-II gezeigt. Auf dem Gehäuse 21 des Schneckenextruders 2, der natürlich auch mit Knetscheiben oder ganz als Schneckenkneter ausgebildet sein kann, ist über den Flansch 34 der Doppelkegelbehälters 3 druckdicht aufgeschraubt. Am Übergang vom Doppelkegelbehälter zum Schneckenextruder 2 sind die beiden als Übergabeorgane vorgesehenen Schnecken 5,5' mit geringem Spiel in der Mitte über die beiden Schnecken 1 des zweiwelligen Schneckenextruders 2 angeordnet. Abweichend von der in Fig. 3 gezeigten mittigen Anordnung der Übergabeorgane 5,5' können diese in Abhängigkeit des aufzubereitenden Kunststoffes auch über nur einer Schnecke 1 des Schneckenextruders 2 oder um 90° verdreht angeordnet sein. Die Schnecken 5,5' sind leicht auswechselbar angeordnet, so dass bei Bedarf ein schneller Austausch vorgenommen werden kann.

Einzelelemente, wie z.B. Zahnräder des Antriebes für die schneckenförmigen Wendeln 4,4' der Vorstufe sind in der Zeichnung nicht näher gezeigt. Über dem Motor 8 und dessen Getriebe 7 werden die beiden obigen Enden der Wendeln 4,4', die als parallele Wellenzapfen 41, 41' ausgebildet sind, angetrieben. Die Drehzahl des Antriebes ist variabel gestaltet, so dass sie jeder Anforderung hinsichtlich Kunststofftyp und/oder Einsatzzweck anpassbar ist.

Nachfolgend soll die Wirkungsweise der Erfindung näher erläutert werden:
Die von oben angetriebene, gleichsinnig drehenden Wendeln 4,4' streifen die Doppelkonuswandung innen und auch sich selbst reinigend ab und verhindert so, dass weniger stabile Produktanteile stagnieren und vercracken. Gleichzeitig übt das Wendelpaar 4,4' eine Förderwirkung aus, streicht das Produkt auf der temperierten Innenwand aus und schafft so grosse Oberflächen, die z.B. die Separierung von gasförmigen Anteilen fördern.

Im Bereich des grössten Querschnitts des Doppelkonus 3 erfolgt tangential die Beschickung über die Zugabeöffnung 6, die in Drehrichtung der Wendeln 4,4' angeordnet ist. Die freigesetzten Gase werden oberhalb des grössten Querschnittes mittels des Entgasungsstutzens 9 abgesaugt, während das verbleibende Produkt in Umfangsrichtung ausgestrichen und dabei nach unten in Richtung Schneckenextruder 2 gefördert wird. Durch die Form der Wendeln 4,4' kann die Bewegung des Produktes zu den Übergabeorganen 5,5' beeinflusst werden. Die Beschickung kann über die Zugabeöffnung 6 und/oder 6' erfolgen bzw. es können auch unterschiedliche Zusatzstoffe durch die Zugabeöffnungen zugeführt werden. Im Bedarfsfall kann auch tangential gegen die Drehrichtung der Wendeln 4,4' zugeführt werden.

Die Übergabeorgane 5,5' am Übergang sind ebenfalls selbstreinigend; sie übergeben das Produkt totraumfrei in den Schneckenextruder 2.
Die Übergabeorgane, bestehend aus Schnecken 5,5' sind auswechselbar und können bei entsprechender Auswahl aktiv fördern wie auch nahezu vollständig absperren, so dass in dem Doppelkonusbehälter 3 z.B. ein Produktniveau erzeugt werden kann. Unter dieser Voraussetzung kann der Doppelkonusbehälter 3 mit eigenem, vom Folgeapparat unabhängigen Prozessdruck z.B. Vakuum betrieben werden. Gleichzeitig lässt sich so die Verweilzeit in weiten Bereichen beeinflussen. Je nach Anforderung empfiehlt es sich, den Antrieb z.B. drehzahl-variabel zu wählen. Die Haupteinsatzgebiet der erfindungsgemässen Vorstufe sind:
- als kontinuierlich betriebene Reaktionsstufe
   Über die Zugabeöffnung 6 wird z.B. ein Vorkondensat zudosiert, das das Wendelpaar 4 erfasst und auf der inneren Behälterwand verteilt. Das angelegte Vakuum sorgt für die Entfernung flüchtiger monomerer Anteile,
während der Energieverlust der Schmelze gleichzeitig durch die beheizte Innenwand wieder ausgeglichen wird. Die erforderliche Verweilzeit wird durch die Wendeln 4,4' mit beeinflusst, so dass ein viskoses Reaktions-Zwischenprodukt entsteht. In dem nachgeschalteten Schneckenextruder 2 wird das Produkt auf die gewünschte Endqualität hochkondensiert.
- als kontinuierlich betriebener Vorverdampfer
   Über die Zugabeöffnung 6 und/oder 6'wird eine Lösung zudosiert, die das Wendelpaar 4 auf der inneren Gefässwand dünn ausstreicht. Lösemittel werden ggf. bei gleichzeitig wirkendem Vakuum ausgedampft und abgesaugt. Die auf geringe Lösemittelreste aufkonzentrierte Lösung wird in den Schneckenextruder 2 ausgetragen und dort auf wenige ppm restentgast.
- als Flashkammer
   Über die Zugabeöffnung 6, die in diesem Fall mit einer Düse ausgerüstet ist (in der Zeichnung nicht dargestellt), wird das überhitzte, unter Druck stehende Produkt zudosiert. Beim Versprühen verdampfen Monomere resp. Lösemittelanteile entsprechend der vorher gespeicherten Energiemenge. Der damit verbundene Temperaturverlust wird ausgeglichen, wenn die Tröpfchen auf die beheizte Doppelkonuswand auftreffen. Der Prozess nimmt seinen Fortgang entsprechend der Betriebsweise als Vorverdampfer.
- als Entgasungsdom
   Der als Vorstufe konzipierte Doppelkegelbehälter 3 kann neben den vorstehenden beschriebenen Einsatzgebieten auch über einer Entgasungsöffnung (Vor- oder Rückwärtsentgasung) auf den zweiwelligen Schneckenextruder 2 aufgesetzt werden. Hierbei regnen die mit dem Gasstrom mitgerissenen Feststoffanteile auf Grund der niedrigen Geschwindigkeit im grössten Querschnitt des Doppelkegelbehälters ab und werden durch das Wendelpaar 4,4' erfasst und dem Prozess im Schneckenkneter wieder zugeführt. Die so gereinigten Gase werden abgesaugt.

Durch die erfindungsgemässe zweistufige Aufbereitung technischer Kunststoffe ist eine Vielzahl von Polymeren und Rezepturen mit optimalen Durchsatzleistungen ermöglicht.
Durch die Vorstufe, dem beheizbaren Doppelkegelbehälter 3, mit den sich selbst und die Innenflächen des Doppelkegelbehälters reinigenden schneckenförmigen Wendeln und der totraumfreien Übergabe aus der Vorstufe zur zweiten Bearbeitungsstufe (Schneckenkneter oder Schmelzepumpe) sind viele bei der Aufbereitung oder Herstellung von Kunststoffen anfallende verfahrenstechnische Schritte wirtschaftlicher beherrschbar.

## Patentansprüche

1. Verfahren zur Aufbereitung oder Herstellung von Kunststoffen, wobei eine Vormischung und Erwärmung und gegebenenfalls eine Entgasung der zugeführten Ausgangsstoffe erfolgt, dadurch gekennzeichnet, dass in einer als Doppelkegelbehälter mit antreibbaren Wendeln ausgebildeten Vorstufe eine homogene Vormischung der vorzugsweise im Bereich des grössten freien Volumens tangential zugeführten Ausgangsstoffe bei einer gleichzeitigen Entgasung der freiwerdenden flüchtigen Bestandteile erfolgt, wobei die Förderleistung in Richtung einer aus einem Schneckenkneter bestehenden zweiten Stufe bei selbstreinigender Wirkung einstellbar ist und die Übergabe aus der Vorstufe unmittelbar totraumfrei in die als Zweiwellenschneckenkneter ausgebildeten zweiten Stufe erfolgt.

2. Verfahren nach Anspruch 1, dadurch gekennzeichnet, dass die Vorstufe als kontinuierlich betriebene Reaktionsstufe zur Erzeugung eines viskosen Reaktions-Zwischenproduktes dient.

3. Verfahren nach Anspruch 1, dadurch gekennzeichnet, dass die Vorstufe als kontinuierlich betriebener Vorverdampfer dient.

4. Verfahren nach Anspruch 1, dadurch gekennzeichnet, dass die Vorstufe als Flashkammer dient.

5. Einrichtung zur Aufbereitung oder Herstellung von Kunststoffen, bestehend aus einem temperierbaren Doppelkegelbehälter mit Zugabe- und Entgasungsöffnung, in dem zwei von oben antreibbare gleichsinnig drehende sich gegenseitig und die Innenwand des Doppelkegelbehälters selbstreinigend abstreifende und eine nach unten gerichtete Förderwirkung besitzende Wendeln angeordnet sind, insbesondere zur Durchführung des Verfahrens nach Anspruch 1, dadurch gekennzeichnet, dass der Doppelkegelbehälter (3) druckdicht als Vorstufe vertikal auf dem Schneckengehäuse (21) eines zweiwelligen, mit zwei gleichsinnig drehenden und ineinandergreifenden Schnecken (1) ausgebildeten Schneckenextruder (2) angeordnet ist, wobei am Übergang zwei ineinandergreifende auswechselbare mit den Wendeln (4,4') verbundene und in der selben Längsachse wie die oberen Wellenzapfen (41,41') der Wendeln (4,4') liegende Übergabeorgane (5,5') vorgesehen sind, die mit geringem Spiel über den Schneckenkämmen des Schneckenextruders (2) enden.

6. Einrichtung nach Anspruch 5, dadurch gekennzeichnet, dass als Übergabeorgane zwei ineinandergreifende und dicht kämmende austauschbare Schnecken (5,5') vorgesehen sind, die mit den über Motor (8) und Getriebe 7 antreibbaren Wendeln (4,4') verbunden sind.

7. Einrichtung nach einem der vorhergehenden Ansprüche, dadurch gekennzeichnet, dass der vertikale Doppelkegelbehälter (3) aus zwei gegeneinander geflanschte Kegelstümpfe (31,32) gebildet ist und seinen grössten Durchmesser im Bereich von über 50% der Behälterhöhe aufweist, wobei in diesem Bereich die Zugabeöffnungen (6) tangential angeordnet sind.

8. Einrichtung nach einem der vorhergehenden Ansprüche, dadurch gekennzeichnet, dass der Doppelkegelbehälter (3) auf einer Schmelzepumpe (Zahnradpumpe) angeordnet ist.

9. Einrichtung nach einem der vorhergehenden Ansprüche, dadurch gekennzeichnet, dass der Doppelkegelbehälter (3) auf einem einwelligen Extruder angeordnet ist.

10. Einrichtung nach einem der vorhergehenden Ansprüche, dadurch gekennzeichnet, dass der Doppelkegelbehälter als Entgasungsdom auf einem Schneckenkneter angeordnet ist.

## Claims

1. Method of preparing or making plastics materials, wherein a premixing and heating and in a given case a degassing of the supplied starting materials is effected, characterised thereby that a homogeneous premixing of the starting materials, which are preferably fed tangentially into the region of the largest free volume, with a simultaneous degassing of the liberated volatile constituents takes place in a preliminary stage constructed as a double cone container with drivable helices, wherein the conveying performance is settable in tendency to a second stage, which consists of a screw kneader, with a self-cleaning action and the transfer from the preliminary stage takes place directly and free of dead space into the second stage constructed as a twin-shaft screw kneader.

2. Method according to claim 1, characterised thereby that the preliminary stage serves as a continuously operated reaction stage for the production of a viscous intermediate reaction product.

3. Method according to claim 1, characterised thereby that the preliminary stage serves as a continuously operating preliminary evaporater.

4. Method according to claim 1, characterised thereby that the preliminary stage serves as a flash chamber.

5. Equipment for the preparation or making of plastics materials, consisting of a cool able double cone container with charging and degassing opening, in which are arranged two helices drivable from above, rotating in like sense reciprocally, wiping the inner wall of the double cone container with self-cleaning effect and possessing a downwardly directed conveying action, particularly for performance of the method according to claim 1, characterised thereby that the double cone container (3) is pressure-tightly arranged as a preliminary stage vertically on the screw housing (21) of a twin-shaft screw extruder (2) constructed with two interengaging screws (1) rotating in like sense, wherein two interengaging transfer elements (5, 5'), which are exchangeably connected with the helices (4, 4'), lie in the same longitudinal axes as the upper shaft (41, 41') of the helices (4, 4') and end with a small play above the screw chambers of the screw extruder (2), are provided at the transition.

6. Equipment according to claim 5, characterised thereby that two interengaging and tightly-meshing exchangeable worms (5, 5'), which are connected with the helices (4, 4') drivable by way of a motor (8) and gear unit (7), are provided as transfer elements.

7. Equipment according to one of the preceding claims, characterised thereby that the vertical double cone container (3) is formed from two frustums (31, 32) flanged against one another and has its largest diameter in the region of 50% of the container height, wherein the charging openings (6) are tangentially arranged in this region.

8. Equipment according to one of the preceding claims, characterised thereby that the double cone container (3) is arranged on a melt pump (geared pump).

9. Equipment according to one of the preceding claims, characterised thereby that the double cone container (3) is arranged on a single-shaft extruder.

10. Equipment according to one of the preceding claims, characterised thereby that the double cone container is arranged as a degassing dome on a second kneader.

## Revendications

1. Procédé pour préparer et fabriquer des matières plastiques, avec pré-mélangeage et chauffage et éventuellement un dégazage des matières de départ acheminées dans l'alimentation, procédé caractérisé en ce que, dans un étage préliminaire réalisé sous forme d'un récipient en double cône comportant des éléments hélicoïdaux entraînables, on réalise un pré-mélangeage homogène des matières de départ introduites tangentiellement, avantageusement dans la zone du plus grand volume libre, avec un dégazage simultané des constituants volatils libérés, avec possibilité de réglage de la capacité de transport ou du débit en direction d'un second étage consistant en un malaxeur à vis, avec effet d'auto-nettoyage, le transfert, à partir de l'étage préliminaire, s'effectuant immédiatement sans espace mort (pour acheminer la matière) dans le second étage réalisé sous forme d'un malaxeur à vis à deux arbres.

2. Procédé selon la revendication 1, caractérisé en ce que l'étage préliminaire sert d'étage de réaction fonctionnant en continu pour produire un produit visqueux intermédiaire de réaction.

3. Procédé selon la revendication 1, caractérisé en ce que l'étage préliminaire sert de pré-évaporateur fonctionnant en continu.

4. Procédé selon la revendication 1, caractérisé en ce que l'étage préliminaire sert de chambre fonctionnant sur le mode éclair.

5. Dispositif de préparation ou de fabrication de matières plastiques, ce dispositif consistant en un récipient en double cône pouvant être soumis à tempérage et comportant une ouverture d'alimentation et une ouverture de dégazage, le récipient comportant deux éléments hélicoïdaux entraînables par le haut, tournant dans le même sens,auto-nettoyants mutuellement et raclant la paroi intérieure du récipient en forme de double cône et exerçant un effet d'acheminement dirigé vers le bas, en particulier pour la mise en oeuvre du procédé selon la revendication 1, dispositif caractérisé en ce que le récipient (3) en forme de double cône est disposé, de manière étanche à la pression, à titre d'étage préliminaire verticalement sur le corps (21), entourant les vis à deux arbres, ce corps comportant deux vis (1) qui tournent dans le même sens et engrènent mutuellement, avec présence dans la zone de transition de deux organes (5, 5') de transfert engrenant mutuellement, remplaçables, reliés et coopérant avec les éléments hélicoïdaux (4, 4') et situés dans le même axe longitudinal que les tourillons (41, 41') supérieurs des arbres des éléments hélicoïdaux (4, 4'), qui se terminent avec un faible jeu au-dessus des crêtes des filets des vis de l'extrudeuse (2) à vis.

6. Dispositif selon la revendication 5, caractérisé en ce qu'on prévoit comme organes de transfert deux vis (5, 5') remplaçables, engrenant mutuellement et de façon étanche, qui sont reliées aux organes hélicoïdaux (4, 4') entraînables à l'aide d'un moteur (8) et d'une transmission mécanique (7).

7. Dispositif selon l'une des revendications précédentes, caractérisé en ce que le récipient (3) vertical à double cône est formé par deux troncs de cône (31, 32), qui présente son plus grand diamètre dans la zone située au-delà de 50 % de la hauteur du récipient, les ouvertures (6) d'alimentation étant disposées tangentielles dans cette zone.

8. Dispositif selon l'une des revendications précédentes, caractérisé en ce que le récipient (3) en forme de double cône est disposé sur une pompe pour matière fondue (pompe à roues dentées).

9. Dispositif selon l'une des revendications précédentes, caractérisé en ce que le récipient (3) en forme de double cône est disposé sur une extrudeuse à un seul arbre.

10. Dispositif selon l'une des revendications précédentes, caractérisé en ce que le récipient en forme de double cône est disposé, à titre de dôme de dégazage, sur un malaxeur à vis.
